Europäisches Patentamt

European Patent Office

Office européen des brevets

(11) Veröffentlichungsnummer: **0 267 424 B1**

(12) **EUROPÄISCHE PATENTSCHRIFT**

(45) Veröffentlichungstag der Patentschrift: **26.02.92**

(21) Anmeldenummer: **87114550.4**

(22) Anmeldetag: **06.10.87**

(51) Int. Cl.⁵: **H01C  17/06**, H01B 1/20

(54) **Elektrische Leit- und Widerstandspaste.**

(30) Priorität: **08.11.86 DE 3638130**

(43) Veröffentlichungstag der Anmeldung:
**18.05.88 Patentblatt  88/20**

(45) Bekanntmachung des Hinweises auf die
Patenterteilung:
**26.02.92 Patentblatt  92/09**

(84) Benannte Vertragsstaaten:
**ES FR GB IT**

(56) Entgegenhaltungen:
**AT-B- 319 586**
**DD-A- 238 618**
**DE-A- 2 719 465**
**DE-A- 3 148 680**
**US-A- 3 639 640**

(73) Patentinhaber: **Preh-Werke GmbH & Co. KG**
**Postfach 1740 An der Stadthalle**
**W-8740 Bad Neustadt/Saale(DE)**

(72) Erfinder: **Griebel, Franz**
**Ringstrasse 6**
**W-8741 Bad Neustadt/Saale(DE)**

**Beschreibung**

Die Erfindung betrifft eine elektrische Leit- oder Widerstandspaste, bei der einem von einem Polymer gebildeten Bindemittel Leitpigmente und Zusatzstoffe beigemischt sind.

Beispielsweise ist eine derartige Widerstandspaste in der DE-PS 31 48 680 beschrieben. Eine solche Widerstandspaste wird für Widerstandsschichten verwendet, die von Schleifern kontaktiert werden. Bei der DE-PS 31 48 680 wird die Lebensdauer der Widerstandsschicht durch eine Beimischung eines Vinylchlorid-Copolymerisats verlängert.

Bei einstellbaren Widerständen oder Potentiometern tritt ein Rauschen auf, wenn der Schleifer über die Widerstandsschicht gleitet. Es hat sich gezeigt, daß dabei Rauschspitzen auftreten können, die eine schlagartige Erhöhung des Widerstands bis zur Unterbrechung bedeuten.

Insbesondere wenn das aus Schicht und Abgriff bestehende System Erschütterungen ausgesetzt ist, können Zitterbewegungen auftreten, die zu extremen Erhöhungen des abgegriffenen Widerstands führen. Die Zuverlässigkeit des Systems ist dadurch beeinträchtigt. Dies ist insbesondere in der Kraftfahrzeugelektronik ungünstig.

Die genannten Erscheinungen lassen sich auf die tribologischen Eigenschaften, also die Reibeigenschaften, der Schicht zurückführen. Die Reibeigenschaften der Schicht durch die Zugabe von Graphit zu beeinflussen, hätte zur Folge, daß sich die Widerstandskennlinie im Laufe der Zeit verändert, da durch die Bewegung des Schleifers Graphitpartikel über die Schichtoberfläche "verschmiert" werden. Ein Fetten der Schichtoberfläche wäre ungünstig, da das Fett im Laufe der Zeit seine Eigenschaften ändert. Eine Aluminiumoxidbeimengung würde zu einem erhöhten Abrieb des Schleifers führen.

Aufgabe der Erfindung ist es, eine Leit- oder Widerstandspaste vorzuschlagen, mit der Schichten mit verbesserten Reibeigenschaften und damit erhöhter Zuverlässigkeit herstellbar sind.

Erfindungsgemäß ist obige Aufgabe dadurch gelöst, daß der Paste 0,5 Gew.-% bis 5 Gew.-%, bezogen auf das Bindemittel, eines Mittels beigemischt sind, das zu 70 Gew.-% bis 40 Gew.-% aus Bariumsulfat und zu 30 Gew.-% bis 60 Gew.-% aus Zinksulfid besteht.

Es hat sich überraschenderweise ergeben, daß dieses Mittel, das in der Farbenindustrie als weiße Farbpigmente verwendet wird, die Reibeigenschaften der Schicht so beeinflußt, daß auch bei Zitterbewegungen des Schleifers extreme Widerstandserhöhungen nicht mehr stattfinden.

Das genannte Mittel ist unter dem Handelsnamen Lithopone (Bayer) marktbekannt.

Eine aus der erfindungsgemäßen Paste hergestellte Schicht gibt auch unter erschwerten mechanischen Bedingungen einen zuverlässigen Kontakt zu einem Abgriff. Dadurch vergrößert sich im Endergebnis auch die Lebensdauer.

Vorteilhafte Weiterbildungen der Erfindung ergeben sich aus den Unteransprüchen und der folgenden Beschreibung eines Ausführungsbeispiels. In der Zeichnung zeigen:

Figur 1 eine Widerstandskurve in Abhängigkeit von der Stellung eines Abgriffs und

Figur 2 den Übergangswiderstand zwischen der Oberfläche der Widerstandsschicht und dem Abgriff.

Eine Widerstandspaste enthält als Bindemittel ein Polymer. Diesem sind Leitpigmente in einer Menge beigemischt, die den gewünschten Widerstandswert ergibt. Die Leitpigmente können beispielsweise von Kohle, Ruß oder Silber gebildet sein. Außerdem enthält die Widerstandspaste Zusatzstoffe. Beispielsweise können der Widerstandspaste Verdünnungsmittel beigemischt sein, die die Verarbeitbarkeit verbessern, Verlaufmittel, die zu einer glatten Oberfläche führen und Absink-Verhinderungsmittel beigemischt sein, die eine gleichmäßige Verteilung der Leitpigmente im Bindemindel gewährleisten.

Dieser Widerstandspaste werden 0,5 Gew.-% bis 5,0 Gew.-%, vorzugsweise 1,0 Gew.-%, Lithopone beigemischt. Die Gewichtsprozente sind auf das Gewicht des Bindemittels bezogen.

Lithopone besteht aus Bariumsulfat und Zinksulfid, wobei der Anteil des Zinksulfids 30 Gew.-% bis 60 Gew.-% und dementsprechend der Anteil des Bariumsulfats 70- Gew.-% bis 40 Gew.-% beträgt. Vorzugsweise wird ein Lithopone verwendet, dessen Zinksulfidanteil 40 Gew.-% beträgt, wobei der Anteil des Bariumsulfats 60 Gew.-% ist. Das Lithopone wird in Pulverform dem Bindemittel zugemischt.

Nach dem Aufbringen der Widerstandspaste auf einen Träger, beispielsweise durch Drucken, wird die Schicht ausgehärtet.

Der Schicht wird dann ein Schleifer zugeordnet.

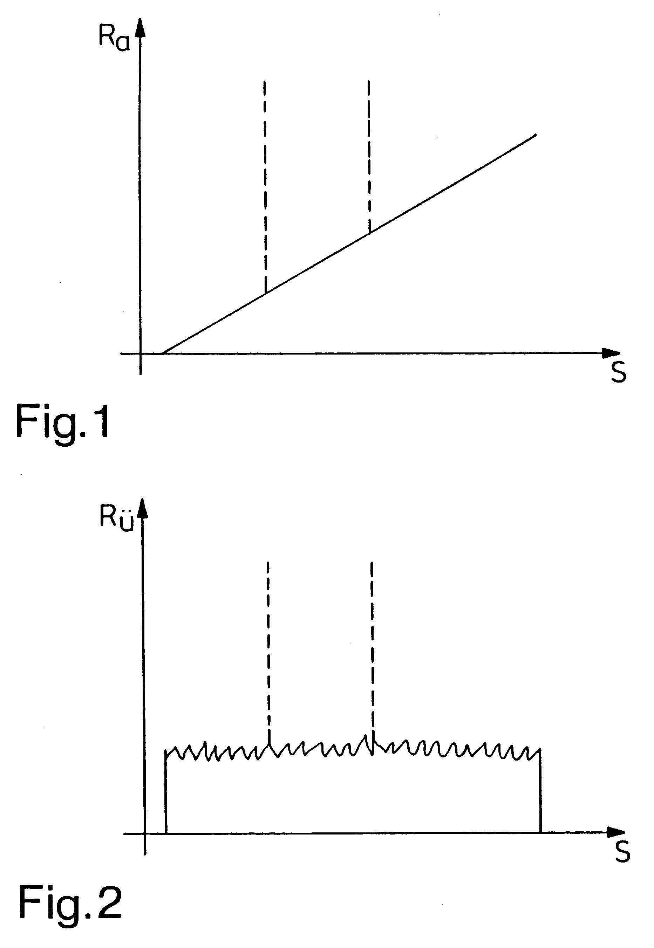

Figur 1 zeigt den vom Schleifer abgegriffenen Widerstand(Ra) in Abhängigkeit von der Verschiebestrecke(s). Figur 2 zeigt den Übergangswiderstand(Rü) zwischen dem Schleifer und der Oberfläche der Schicht in Abhängigkeit von dem Verschiebeweg(s). Messungen haben ergeben, daß die bei anderen Widerstandsschichten auftretenden extremen Widerstandserhöhungen, die in den Figuren strichliert angedeutet sind, bei einer Widerstandsschicht, die aus der genannten Widerstandspaste hergestellt ist, nicht auftreten.

Die angegebene Untergrenze der Beimischung des Lithopone bestimmt sich daraus, daß damit der gewünschte Effekt noch auftritt. Die angegebene Obergrenze ist gewählt, damit durch das elektrisch nicht leitende Lithopone die übrigen elektrischen Eigenschaften der Schicht nicht wesentlich beeinflußt werden.

**Patentansprüche**

1. Elektrische Leit- oder Widerstandspaste, bei der einem von einem Polymer gebildeten Bindemittel Leitpigmente und Zusatzstoffe beigemischt sind, dadurch gekennzeichnet, daß der Paste 0,5 Gew.-% bis 5 Gew,-%, bezogen auf das Bindemittel, eines Mittels beigemischt sind, das zu 70 Gew.-% bis 40 Gew.-% aus Bariumsulfat und zu 30 Gew.-% bis 60 Gew.-% aus Zinksulfid besteht.

2. Leit- oder Widerstandspaste nach Anspruch 1, dadurch gekennzeichnet, daß dem Bindemittel 1 Gew.-% des Mittels beigemischt ist.

3. Leit- oder Widerstandspaste nach Anspruch 1 oder 2, dadurch gekennzeichnet, daß das Mittel aus 60 Gew.-% Bariumsulfat und 40 Gew.-% Zinksulfid besteht.

4. Leit- oder Widerstandspaste nach einem der vorhergehenden Ansprüche, dadurch gekennzeichnet, daß das Mittel dem Bindemittel in Pulverform beigemischt wird.

**Claims**

1. Electrically conductive or resistive paste in which conductive pigments and additives are added to a bonding agent formed from a polymer, characterised in that to the paste there is added 0.5 wt% to 5 wt%, based on the bonding agent, of an agent which comprises 70 wt% to 40 wt% of barium sulphate and 30 wt% to 60 wt% of zinc sulphide.

2. Conductive or resistive paste according to claim 1, characterised in that 1 wt% of the agent is added to the bonding agent.

3. Conductive or resistive paste according to claim 1 or 2, characterised in that the agent comprises 60 wt% of barium sulphate and 40 wt% of zinc sulphide.

4. Conductive or resistive paste according to one of the preceding claims, characterised in that the agent is added to the bonding agent in powder form.

**Revendications**

1. Pâte électriquement conductrice ou résistive, dans laquelle des pigments conducteurs et des additifs sont incorporés par mélangeage à un liant formé d'un polymère, pâte caractérisée en ce qu'à cette pâte sont incorporés 0,5 % en poids à 5 % en poids, sur la base du liant, d'un produit qui consiste pour 70 % en poids à 40 % en poids en du sulfate du baryum et pour 30 % en poids à 60 % en poids en du sulfure de zinc.

2. Pâte conductrice ou résistive selon la revendication 1, caractérisée en ce qu'l % en poids du produit est incorporé par mélangeage au liant.

3. Pâte conductrice ou résistive selon la revendication 1 ou 2, caractérisée en ce que le produit consiste en 60 % en poids de sulfate de baryum et en 40 % en poids de sulfure de zinc.

4. Pâte conductrice ou résistive selon l'une des revendications précédentes, caractérisée en ce que le produit est incorporé sous forme de poudre au liant.

Fig.1

Fig.2